# EUROPEAN PATENT APPLICATION

(11) **EP 0 562 976 A1**
(43) Date of publication of application: **29.09.1993**
(21) Application number: 93420111.2
(22) Date of filing: 10.03.1993
(51) Int. Cl.: H04N 17/04

(54) **Luminance measurement method and apparatus**

(30) Priority: 23.03.1992 US 855281
(71) Applicant: EASTMAN KODAK COMPANY, Rochester, New York 14650-2201 (US)
(72) Inventor: Donahue, Timothy Frank, c/o EASTMAN KODAK COMPANY, Rochester, New York 14650-2201 (US); Bonino, Bruce Stephen, c/o EASTMAN KODAK COMPANY, Rochester, New York 14650-2201 (US)
(74) Representative: Boulard, Denis

(57) **Abstract**

A system that uses a light to frequency converter sensor, a counter and a microprocessor to measure luminance of a cathode ray tube (CRT) of a computer system. The refresh period of the CRT is first determined by detecting the peaks of the light output produced by the CRT. The peaks are detected by detecting a change in the pulse width of the signal from the light to frequency converter sensor. The refresh period is used to determine a maximum integration period over which the calibration system can measure luminance. The maximum integration period is used to count pulses produced by the light to frequency converter. The number of pulses or the count corresponds to the light output or luminance.

## Description

### Cross References to Related Applications

This application is related to U.S. Application entitled Method And Apparatus For Providing Color Matching Between Color Output Devices having U.S. Serial Number 817,797 filed on December 31, 1991, to U.S. Application entitled Method And Apparatus For Adaptive Color Characterization And Calibration, having U.S. Serial Number 855,280 filed on March 23, 1992, to U.S. Application entitled Subtractive Measurement Method And Apparatus having U.S. Serial Number 855,400 filed on March 23, 1992, to U.S. Application entitled CRT Calibrator Unit having U.S. Serial Number 855,260 filed on March 23, 1992 and to U.S. Application entitled Monitor Calibrator Housing And Mounting Bracket U.S. Serial Number 855,399 filed on March 23, 1992 all incorporated by reference herein.

### BACKGROUND OF THE INVENTION

### Field of the Invention

The present invention is directed to luminance measurement of a cathode ray tube type display of a computer system and, more particularly, to determining what type of computer display is being measured, determining the refresh period of the display, determining an optimum integration time and measuring the luminance for the integration time.

### Description of the Related Art

Calibration of computer controlled color monitors (cathode ray tubes) requires precise measurement of the relationship between the computer controlled video signal (primary digital-to-analog converter (DAC) intensity level) and the actual emitted luminance of the three independent primary guns.

CRTs project images by rapidly sweeping electron beam patterns across and down the face of a glass tube exciting the phosphor coating which in turn emits light. To the eye of a typical observer, little or no flicker can be detected, and the projected image appears to be continuous and stable. The same image observed by the LFC reveals a very well defined luminance flicker repeating at the retrace frequency (ie. 60 Hz) of the CRT.

The flickering luminance of a CRT as a function of time, is shaped much like the teeth of a saw, where each saw tooth represents a single CRT refresh, or flicker. The point of the tooth represents the peak luminance produced by the electron beam excited phosphor for that refresh cycle. Immediately after excitation, the phosphor will emit a decaying luminance for a short period of time, this phenomenon is termed phosphor persistence and can be visualized as the sloping trailing edge of the saw tooth.

Luminance can be defined as the area under the curve defined by the leading and trailing edges of the saw tooth for some interval of time.

The unstable, flickering nature of CRTs places an integration time dependency on the light measurement process, making it mandatory to measure (integrate) monitor luminance for a period of time integral to the time period of a single refresh cycle. Therefore, it is necessary to establish the refresh rate of the CRT being calibrated to determine a correct integration time period.

In practice, there exist several conventional ways to establish the refresh rate that can be relied upon and used to determine the integration time period of a monitor: the manufacturers specification of the refresh rate can be relied upon and used to determine the integration time period (some monitors are multi-sync and support different refresh rates for a single monitor), or the synchronization signal generated by the computer's video adapter hardware can be monitored by directly connecting to the synchronization signal line. Both of these ways are effective, however the first is less reliable since it relies on the manufacturer's specification accuracy as well as the maintenance of a database of supported monitors, and the latter requires specialized circuitry and an external connection to the video board which adds complexity as well as cost.

### SUMMARY OF THE INVENTION

It is an object of the present invention to allow the same calibrator sensor unit to operate with different types of computers, such as IBM and Apple personal computers.

It is another object of the present invention to automatically synchronize the integration period based on light intensity signals produced by the CRT display.

It is another object of the present invention to produce an adaptive integration time which maximizes the integration time period, and the number of CRT refresh cycles within the period, and thereby maximizes the accuracy of the light output being measured.

It is a further object of the present invention to phase the start of the integration time to a period of sensor operation when the likelihood of error in detecting the light output signal is lowest.

The above objects can be attained by a system that uses a light to frequency converter, counter and computer or microcontroller to measure luminance of a cathode ray tube (CRT) in a computer system as commanded by the computer driving the CRT. A light sensitive device, such as a light to frequency converter (LFC) from Eastman Kodak Co. having identification number 237092 and used in Kodak cameras such as S500, can be used to measure the light level emitted by the cathode ray tube (CRT) to establish the relationship of the DAC to luminance signal.Prior to luminance measurement the refresh period of the CRT is determined by the calibrator system by detecting the peaks of the light output produced by the CRT. The refresh period is used to determine a maximum integration period over which the calibration system can measure luminance. The integration period is the time period over which the computer counts pulses produced by the light to frequency converter. The number of pulses, or count corresponds to the light output or luminance of the CRT. The light output for various digital inputs can then be used to build a characteristic luminance curve for the CRT which can then be used to create a calibration or aim curve that converts digital outputs produced by the computer to calibrated outputs to drive the CRT producing a desired response.

These together with other objects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Fig. 1 illustrates the components of the present invention;
Fig. 2(a) depicts a setup operation;
Fig. 2(b) depicts a measurement operation by the microcomputer;
Fig. 3 depicts the operations of the programmable microcontroller of Fig. 1;
Figs. 4a and 4b illustrate how the refresh period of the CRT display of Fig. 1 is determined;
Fig. 5 is a flowchart of the integration time measurement operation of Fig. 3;
Fig. 6 depicts the routine which measures the refresh period;
Fig. 7 is a flowchart of the peak time detection routine of Fig. 6;
Fig. 8 depicts the routine which obtains the pulse width for the routine of Fig. 7;
Fig. 9 illustrates the phasing of the integration time;
Fig. 10 illustrates the details of the luminance measurement operation of Fig. 3; and
Fig. 11 illustrates an alternate method of determining a measurement start time reference.

### DESCRIPTION OF THE PREFERRED EMBODIMENTS

The calibrator system 10 of the present invention is basically a light meter with a computer communications interface 12. A host computer 14 generates a series of color patches on a color display 16 and the luminance of each patch is measured by the calibrator 10 and transmitted directly to the host computer 14 for analysis. The calibrator attaches to the center of the monitor screen by suction cup. The preferred sensor 18 of the present invention is the light to frequency converter from Kodak previously mentioned. The light to frequency converter sensor 18 generates a pulsing voltage at a frequency proportional to the number of photons of light that hit the sensor. The brighter the light, the higher the frequency. The oscillating pulse signal produced by the sensor 18 is input to a programmable microprocessor 20, such as a microcontroller from the Motorola M68HC05 family, through a counter 22. The count, which corresponds to the luminance measured, is transferred through the interface 12 to the host computer 14. The interface 12 is actually a pair of interfaces, one for an IBM type personal computer and one for an Apple type personal computer. The programmable microprocessor 20 determines which type of host computer 14 is being calibrated and operates in the appropriate communication mode through the appropriate interface. A transistor type switch-or one-shot 24 is used to ground the output of the light to frequency converter sensor 18 effectively preventing the counter 22 from counting pulses. The details of the electronic components of the system 10, including the dual interfaces, can be found in the related application entitled CRT Calibrator Unit previously mentioned.

Since a CRT generates a flickering luminance signal due to the retrace of the electron beams, it is necessary to integrate the light intensity for a period of time that is a multiple of the refresh cycle time. Since all monitors do not have the same refresh rate, it is necessary to determine the monitors refresh frequency and calculate a custom integration time integral to the refresh cycle time. The present invention performs such an operation using the light output by the CRT. The microprocessor 20 can detect the refresh cycle time by monitoring the LFC modulation frequency as it alternates from high to low. A high frequency LFC modulation, as indicated by a narrow pulse width, indicates phosphor excitation caused by the electron beam sweep, and a low frequency LFC modulation, indicated by a wider pulse width, indicates the period of time after the phosphor's luminance decays. By using a two microsecond resolution timer included in the microprocessor 20 as a reference, the time between consecutive high frequency spikes can be determined, and a measurement integration time period can be established dynamically from the light output of the CRT.

To obtain the highest light measurement precision, the start time of the measurement integration interval is very important when using a light sensor 18 such as the preferred sensor.

If the integrating or pulse counting period begins and ends at a point in time when the phosphors are excited, (at a high luminance level) the microprocessor 20 is more likely to miss a few LFC sensor 18 pulses due to the high modulation-frequency, and the limited sampling speed of the microprocessor 20. On the other hand, if the integrating period begins and ends at a point in time when the phosphors are not excited (between phosphor refreshes) and the LFC modulation frequency is very low, then the microprocessor 18 is less likely to skip pulses and as a result consecutive measurements will be more stable. The present invention phases the integration start time with the time between phosphor refreshes for improved precision.

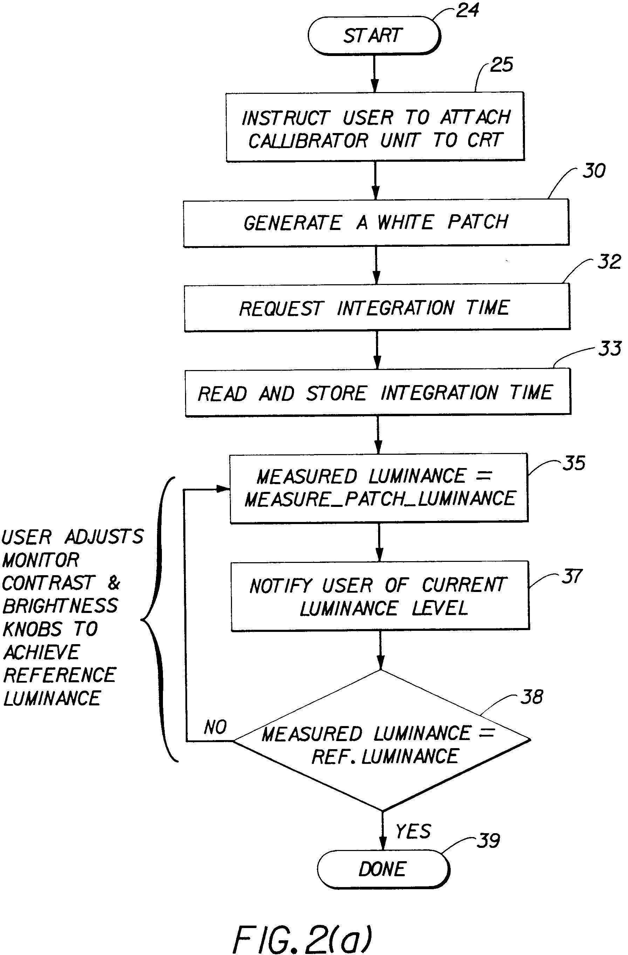

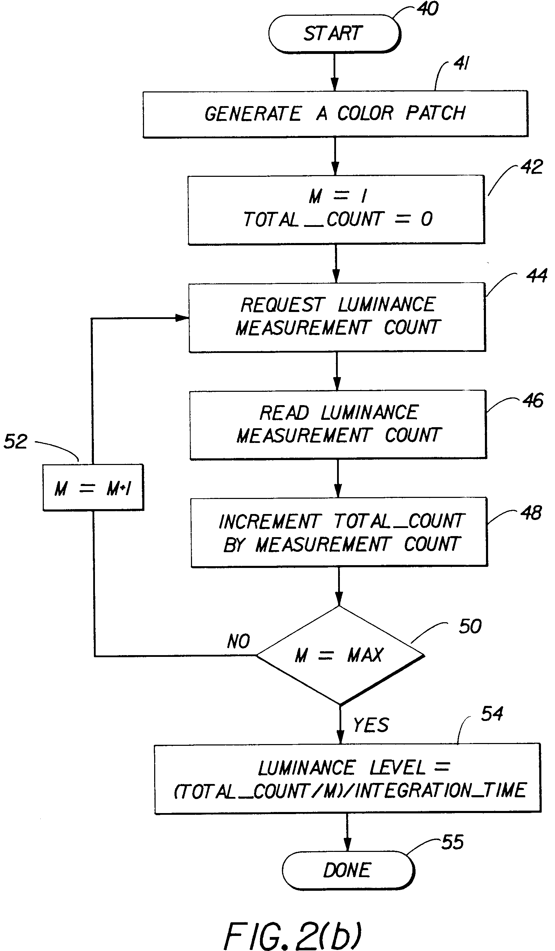

Prior to the measurement of luminance output for a characteristic CRT curve measurement operation, the computer 14 allows the user to go through a setup operation, as described in Fig. 2(a), in which the user is instructed 25 to attach the calibration system 10 to the CRT screen 16. Next in the setup operations' a white color patch is displayed 30 by computer 14 on display 16, then the refresh cycle and integration time period determination command 32 is sent by the computer 14 to the calibration system's programmable microprocessor 20, and the integration time is returned and stored 33. A luminance measurement is made 35 and the result is displayed to the user 37 and then compared to a predetermined reference setting 38. If the measurement does not match the reference luminance level, the cycle of steps 35 through 38 are continued in the setup operation until the users adjustment of the CRT's contrast and brightness settings causes the measured white patch luminance to patch the reference luminance desired to establish a calibration reference setting. Once the setup operation is complete, characteristic curve measurements can be made.

At the beginning of a measurement operation, as illustrated in Fig. 2(b), the computer 14 generates a color patch 41. This color patch is preferably a white color patch if the operation is called from the setup operation and is otherwise generated in accordance with the subtractive measurement technique described in the related application previously mentioned. Once the color patch is generated, the computer commands the calibration system 10 to measure the luminance of the computer 14 generated color patch on display 16. The measurement process begins with the initialization 42 of a measurement counter M used to determine when sufficient measurements have been made, and setting of raw luminance measurement counter total count to zero. To improve the accuracy of the luminance measurement several luminance measurements are made for the integration period previously determined in Fig. 2(a) steps 32 and 33, and averaged for MAX measurements 50. The computer 14 then enters a loop during which the necessary number of luminance measurements are made for the specified MAX number of measurements to be averaged, that is, until the test 50 is passed. The first operation in the loop is for the computer 14 to transmit 44 a luminance measurement command to the calibrator system 10. The returned count or frequency measured over several refresh periods, is read 46 and added to total count 48 for later calculation of an average luminance measurement by the computer 14. The number of measurements made so far in the loop is tracked by incrementing 52 the measurement counter M with each loop iteration until MAX measurements are made. Finally, the average absolute luminance is then calculated 54 by first dividing the total count by M, which calculates the average luminance measurement count, and this result is then divided by the integration time to normalize the average light intensity value to light intensity measurement independent of the integration time.

When the computer 14 is measuring the characteristic curve of the display 16 for a particular color, a color patch for a position on the characteristic curve is generated and the operation of Fig. 2(b) starting with step 42 is performed again. Once all of the points for a particular color characteristic curve, such as a red curve have been determined, a calibration curve or AIM curve can be determined in accordance with the technique described in the related application previously mentioned. The AIM curve is used to adjust the output signal produced by computer 14 to control display 16, so that the display 16 will provide a desired response. Once a particular AIM curve has been determined, other AIM curves for the other colors produced by the display 16 can be obtained.

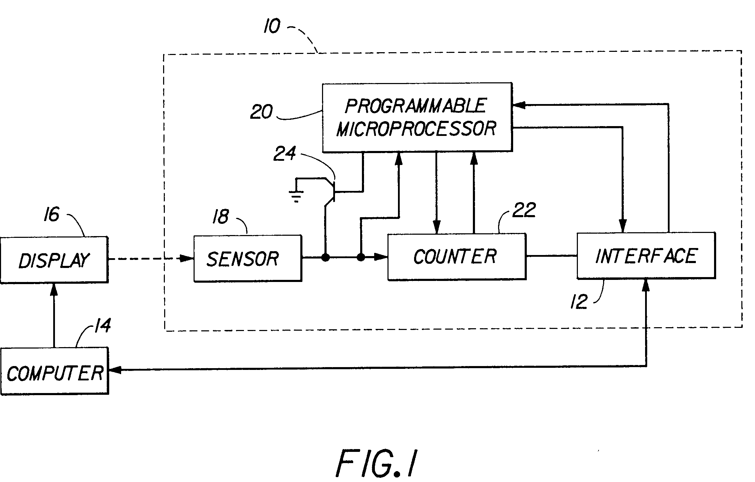

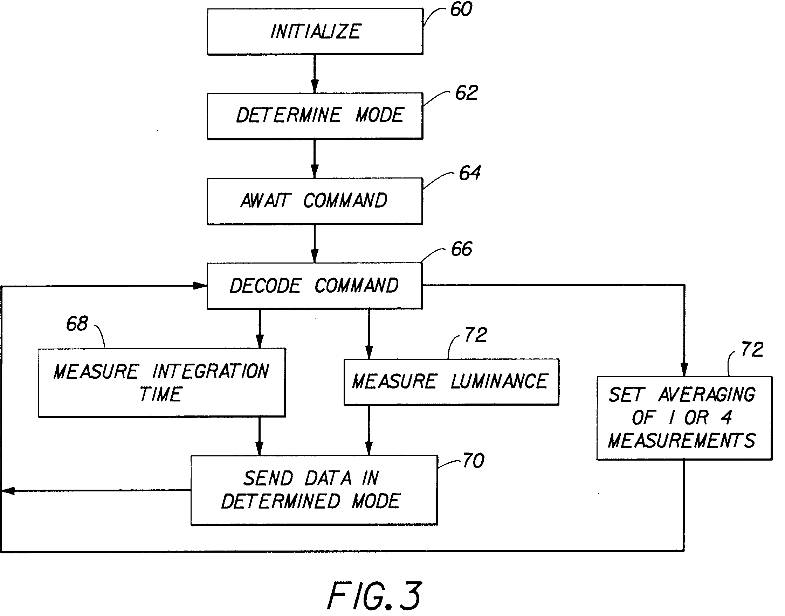

The programmable microprocessor 20 illustrated in Fig. 1 performs the operations illustrated in Fig. 3. When power is first supplied to the calibrator system 10, the microprocessor 20 initializes 60 the various counters, communication ports and variable storage locations which are used in the luminance measurement process. The system then determines 62 in which communication mode the calibrator system 10 should be operating. The microcontroller 20 then enters a wait state awaiting 64 a command from the computer 14. When the command is received, it is decoded 66. If the command requests that integration time be measured, the system performs 68 the integration time measurement and then sends 70 the integration time measured to the computer 14 using conventional communication protocols for the RS-232 IBM PC type bus or the Apple ADB bus depending on the communication mode. If the command is a luminance measurement command, the luminance is measured 72 for the integration time period and the luminance value or count is sent 70 to the computer 14. Other commands can be decoded such as for setting the phasing method to one 72 based on average measurements.

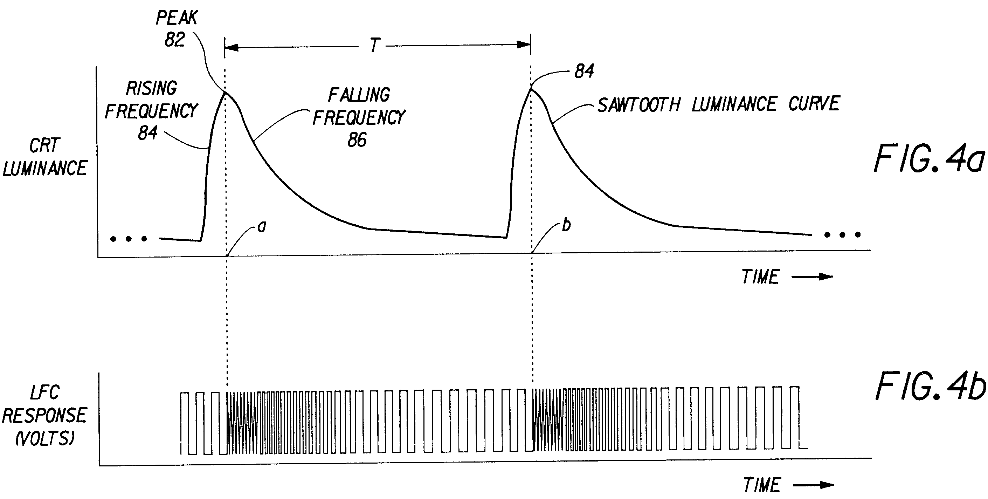

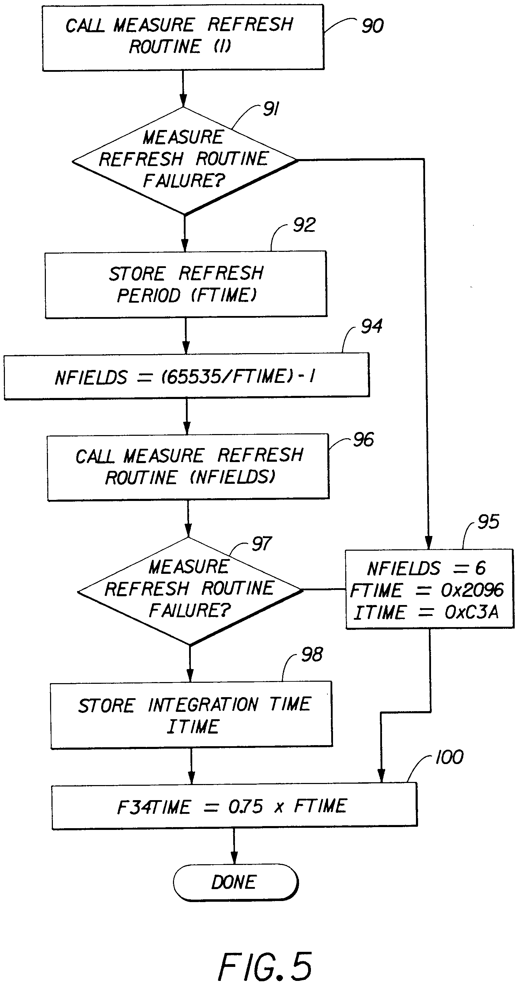

To determine the integration time the refresh period of the CRT display 16 must be determined and the integration period must be synchronized to the refresh cycle. As illustrated in Fig. 4a, the light output or luminance produced by display 16 is characterized by a saw tooth shaped curve 80 which includes a peaks 82 and 84. On one side of each peak is a rapidly rising light output 84 and on the other side is a decaying light output 86. The period T between the peaks 82 and 84 is the refresh period. By measuring the time a of the first peak 82 and the time b of the second peak 84 the refresh period can be determined by subtracting a from b. As illustrated in Fig. 4b, the response of the preferred light to frequency converter sensor 18 increases in pulse frequency as the light level sensed by the sensor 18 increases and decreases in frequency as the light level sensed by sensor 18 decreases. That is, the pulse width of the pulses produced by the sensor 18 decrease while luminance increases until the peak 82 and the pulse width increases thereafter. The pulses also increase in width to a maximum between peaks 82 and 84. The present invention determines the time of the peaks 82 and 84 by determining when the pulse width produced by the sensor 18 makes a transition from a decreasing pulse width to an increasing pulse width. Maximum pulse width detection is used to determine when to begin looking for the transition. The refresh period measurement, synchronization and integration time determinations will be discussed in more detail with respect to Fig. 5.

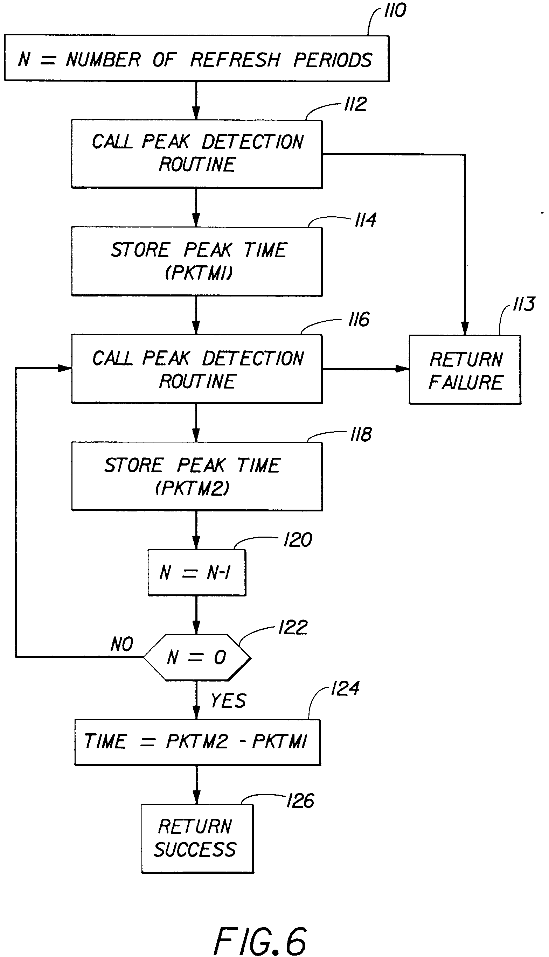

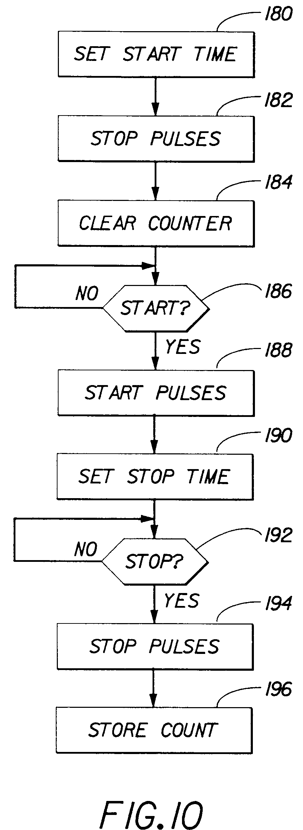

As previously mentioned, to obtain the best luminance measurement, the luminance integration time must be integral to the CRT's refresh rate such that the counting of the light to frequency converter output oscillations for a fixed period of time yields a count or integration value proportional to light intensity. Since all CRTs do not operate at the same refresh rate no single integration time can be defined for all displays 16. It is therefore necessary to determine an integration time period based on the refresh rate of the display and the maximum range of the timer such as that found in the preferred microprocessor 20, that measures the actual integration period. This adaptive integration time determination determines the actual integration time and stores it for transmission to the computer 14. All time values measured in accordance with the present invention represent two microseconds per increment, since the internal clock of microprocessor 20 increments in two microsecond increments, so a time of 50 output from the system 10 to the computer 14 represents an actual time of 100 microseconds. The first operation in determining the integration time period is to measure 90 the duration of one vertical refresh cycle time period by calling the measure refresh routine for a single refresh cycle time measurement. This measure refresh routine will be discussed in more detail with respect to Fig. 6. If a refresh signal is not detected, the measure refresh routine will fail 91 and a default refresh time and integration times are set 95. If a refresh signal is detected, the time value determined by the refresh measurement routine is then stored 92. The microprocessor 20 must then determine 94 the number of vertical refresh cycles to integrate for the total integration time. Since the timer of the preferred microcontroller is only a 16 bit timer, the maximum range of the timer is 65535 or 131070 microseconds. Therefore, it is necessary to limit the number of refresh cycles integrated to a number that when multiplied by the refresh cycle time, fits within the maximum range of the timer. For a 60 Hz monitor 6 vertical refresh fields are typically integrated. Once the number of refresh cycles in the integration time period are determined, the total integration time is determined by calling 96 the refresh measurement routine with the number of refresh cycles as an argument loaded in the accumulator of the microcontroller 20. That is, the actual time required for the maximum number of refresh cycles is measured rather than just returning the number of field times the refresh time. When a single refresh is measured, for example when FTIME was measured in step 92, some amount of error is present in the measurement due to program execution overhead in the microprocessor 20 that leads to some minor inaccuracy in detecting the actual absolute instance in time the luminance peak occurred. Assume that +/-20 microseconds of error is present in the measurement of FTIME. If NFIELDS is 6, then multiplying 6 * FTIME will yield a possible scaled error of +/-(20 * 6) microseconds. To minimize this error, it is preferred, as occurs in step 96, to make a single continuous measurement for the duration of, in this case, 6 refresh frames which are delimited by and require the detection of 7 consecutive luminance peaks. The error associated with a single refresh measurement versus multiple refresh measurements are the same, say +/-20 microseconds since the error occurs only when detecting the first and last peak. Step 96 returns an adaptive integration period time. Again if a refresh signal is not detected the default times are used. The integration time which is returned is stored 98. At this point since the vertical refresh period is known, the time of 3/4 a vertical refresh period can be determined 100 for later use when phasing the integration start time as will be discussed with respect to Fig. 10.

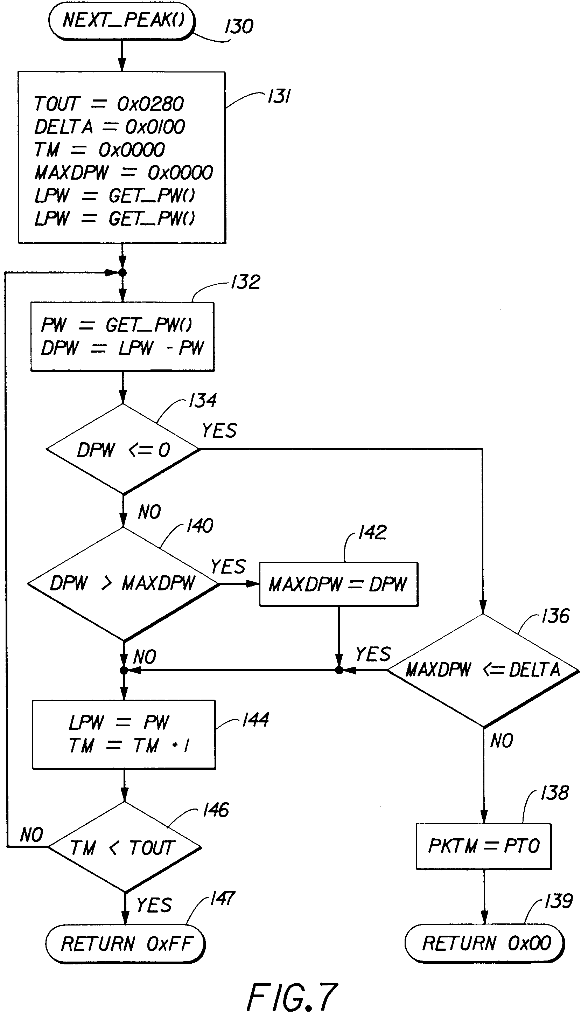

As illustrated in Fig. 6 the refresh measurement routine called in Fig. 5 sets 110 a value equal to the number of refresh periods to be measured as specified in the accumulator register. The system then calls 112 a peak detection routine which will be discussed in more detail with respect to Fig. 7. If no peak luminance signal is detected, no refresh time can be determined so a failure flag is returned 113. Otherwise the peak time returned from the peak detection routine is stored 114. This is the time a illustrated in Fig. 4a. The system then enters a loop during which additional peaks are detected. This loop calls 116 the peak detection routine again and stores 118 the returned peak time. The number of refresh periods to measure is decremented 120 and tested 122 to determine if the time for the number of refresh periods desired has been determined. For example, if the refresh cycle period itself is actually being measured as in step 92 of Fig. 5, the peak time stored in step 118 corresponds to time b of Fig. 4a. If, on the other hand, a number of refresh cycle period measurements is requested to determine the integration time, as required in step 96 of Fig. 5, the peak time stored in step 118, if the number of refresh periods to be measured is 6, would be the time at which the seventh peak is detected. Once the loop has been executed for the required number of times, the time between the desired peaks is calculated 124 and a success flag is returned 126. As previously discussed the time returned in step 92 is the refresh period time T illustrated in Fig. 4a and the time returned in step 96 is the time required for the number of refresh periods in the adaptive integration period.

The peak detection routine, as illustrated in Fig. 7, starts by performing an initialization operation 131 in which variables are set and two consecutive pulse widths are obtained to initialize a start time used to measure the width of consecutive pulses. The system then obtains 132 the pulse width for a third time and not only stores the pulse width but the time (PTO) of the rising edge of that pulse. The change in the pulse width is determined and tested 134 to determine whether a transition has occurred. During actual operation, the pulse width goes from a very large value to a very small value within a single pulse cycle. That is, when the pulse width of a current pulse is subtracted from the pulse width of a previous pulse, a relatively large positive number will be produced. This large positive number (actually the occurrence,of the sign bit switch) is the indicator that the peak transition is occurring. If the transition has occurred the system determines 136 whether a maximum change in the pulse width is less than a pulse width change threshold value confirming peak detection. If so, the time of the rising edge of the pulse is stored 138 as the time of the detected refresh and a return of the peak time occurs 139 successful. To ensure that the peak has occurred the change in the pulse width is tested 140 to determine whether the change in pulse width has exceeded a maximum change. If so a maximum value is saved 142. If not the current pulse width is saved and a time out counter is incremented 144. The time out counter value is tested 146 against a time out value which is the maximum number of loop iterations allowed for detection. If the time out occurs a return failure occurs 147.

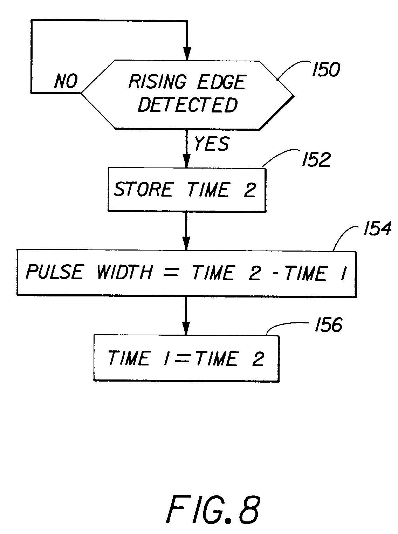

The get pulse width routine, as illustrated in Fig. 8 starts by detecting 150 a rising edge. The time at which this rising edge occurs is stored and the pulse width is calculated 154. After the pulse width is determined, the time is stored 156 and time 1 becomes the time which is transferred back to the peak detection routine in step 134 of Fig. 7.

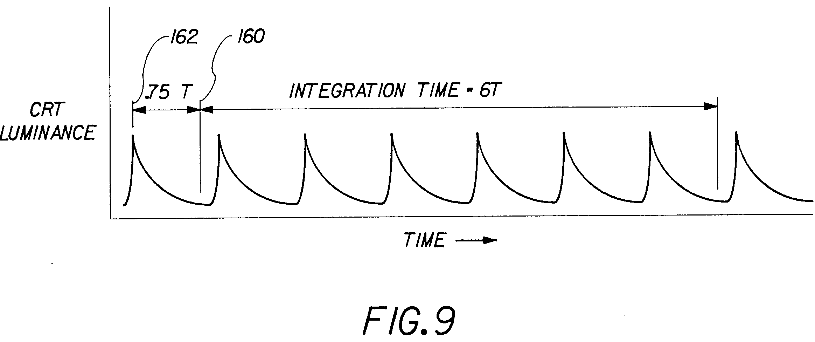

After the integration time has been determined it is possible to take a luminance measurement by counting the number of light to frequency converter signal cycles that occur during the established integration time period. Adjustment of the start of the integration time period to begin integrating or counting oscillations during a low frequency or low luminance time period which is indicative of the time between phosphor excitations (between CRT vertical refresh sweeps) improves the signal measurements by ensuring that pulses produced by the light to frequency converter sensor 18 are not missed. Experimentation has led to a determination that a good integration start time is a time period of 3/4 of the measured single refresh time period immediately after the detection of a vertical refresh sweep. This is illustrated in Fig. 9 where the start 160 of the integration time period is referenced to a peak 162. Fig. 9 shows the typical six refresh period integration time. During luminance measurement, the ability to strategically begin integrating at a specific point in time following a refresh sweep is made possible by employing the peak detection routine illustrated in Fig. 7 to detect the peak 162.

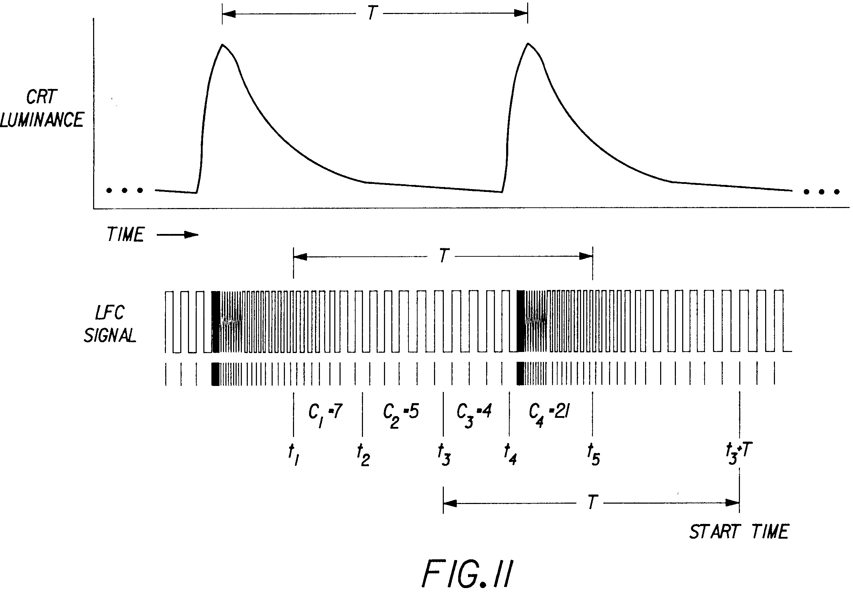

As illustrated in Fig. 10, measurement 72 of luminance begins by setting 180 a start time. The start time is referenced by calling the peak detection routine which returns the time of the peak 162. This provides an absolute reference in time to the refresh sweep. If the peak detection routine has failed an alternate method of determining the integration start time reference is employed as discussed with respect to Fig. 11. The start time is determined and set by adding the 3/4 time, determined in step 100 of Fig. 5, to the detected peak time. Once the start time is determined, it is loaded into a timer compare register available in the microprocessor 20. The microprocessor 20 then stops 182 the pulses from being transmitted from sensor 18 to counter 22 by activating the switch 24 to ground the connection. The counter 22 is then reset 184. When the hardware flag for the timer compare register is set, indicating that the free running timer of the microprocessor 20 matches the contents of the timer compare register, the decision 186 to start counting is made. The microprocessor 20 immediately releases switch 24 to start providing pulses from sensor 18 to counter 22. The system then stores 190 a stop time in the timer compare register. The stop time or integration end time is a time value that is the sum of the current free running microprocessor timer value (or the start time) and the integration time stored in step 98 of Fig. 5. Once again the system polls 192 the timer compare flag in a tight loop waiting for the free running timer to equal the stop time which is the signal to stop integrating. When the stop signal is produced, the microcontroller 20 controls switch 24 to stop the pulses from being transmitted from sensor 18 to counter 22 and then stores 196 the count. As previously discussed, the count is then transmitted to the microprocessor using a conventional communication protocol suitable for the particular mode.

If the call to the peak detection routine in step 180 of Fig. 10 fails due to an inability to pinpoint the peak refresh luminance because the luminance is too low, the alternate method of determining the integration start time is employed, and is illustrated in Fig. 11. This method relies on counting pulses beginning at arbitrary time t1 for a time period of 1/4th of a refresh time T to time t2 to obtain a pulse count of C1. The count value C1 represents the luminance during the time period from t1 to t2. The luminance counts of C2, C3, and C4 are all obtained in the same manner, each representative of the luminance for the remaining three 1/4 time periods of refresh time T. The 16 bit free running 2 microsecond timer in the microprocessor 20 is used as the time reference, and the time values of t1, t2, t3, and t4 are stored to mark the time of measured luminances C1, C2, C3 and C4 respectively. Once C1, C2, C3 and C4, and associated time references t1, t2, t3 and t4 are known, the microprocessor 20 can determine the lowest luminance 1/4 refresh time interval by selecting the lowest luminance value among C1, C2, C3 and C4 (in the case of Fig. 11, C3 has the lowest luminance value of 4). The time value t1, t2, t3, or t4 associated with the lowest luminance value is the integration start time reference. The integration start time is determined by adding the refresh time T to the start time reference (in the case of Fig. 11, the time associated with C3 is t3).

The present invention has been described with respect to detecting light output peaks using transition in pulse width. Since pulse width is inversely related to frequency, the invention could just as well detect an increasing to decreasing frequency transition. The present invention has also been described using a 16 bit timer counter in the preferred microprocessor that limits the number of refresh cycles in an integration period. If a counter having a higher number of bits were used, the accuracy of the luminance measurement would be further improved.

The many features and advantages of the invention are apparent from the detailed specification and thus it is intended by the appended claims to cover all such features and advantages of the invention which fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method of detecting a display refresh synchronization time, comprising the steps of:
(a) sampling light output by the display; and
(b) detecting a time of a peak in the light output as defining a refresh synchronization time.

2. A method of determining a display refresh cycle, comprising the steps of:
(a) sampling light output by the display;
(b) detecting first and second times of peaks in the light output; and
(c) determining a difference between the first and second times as a length of a refresh cycle where the first time is a start of the refresh cycle.

3. A method as recited in claim 2, wherein a light to frequency converter produces pulses having a pulse width corresponding to the light output and step (b) comprises detecting one of the first and second peaks by detecting an increasing to decreasing pulse width of the pulses.

4. A method as recited in claim 2, wherein a light to frequency convertor produces a signal with a frequency corresponding to light output and step (b) comprises detecting one of the first and second peaks by detecting an increasing to decreasing frequency transition.

5. A method of determining an integration period for measuring luminance of a display, comprising the steps of:
(a) sampling light output by the display;
(b) determining a refresh cycle length from the light output; and
(c) determining the integration period as an integral number of refresh cycles.

6. A method as recited in claim 5, wherein step (c) comprises the steps of:
(c1) determining a number of refresh cycles in a maximum time count of a time counter; and
(c2) measuring a time required for the number of refresh cycles as the integration time using the light output.

7. A method as recited in claim 6, wherein the number of refresh cycles comprises the maximum time count integer divided by the refresh cycle length minus one.

8. A method of synchronizing luminance measurement of a display, comprising the steps of:
(a) sampling light output by the display;
(b) determining a refresh period from the light output;
(c) determining an integration period from using the refresh period;
(d) detecting a start of a refresh period from the light output; and
(e) setting a start of luminance measurement at the start of the refresh period adjusted by a predetermined portion of the refresh period.

9. A method as recited in claim 8, wherein the predetermined portion is 3/4 of the refresh period.

10. A method of measuring luminance of a display, comprising the steps of:
(a) sampling light output of the display using a light to frequency converter producing pulses;
(b) determining an integration time period and start time from the pulses; and
(c) counting pulses for the integration time period starting at the start time.

11. A method as recited in claim 10, wherein step (b) comprises setting the start time at a low light output level.

12. A method of detecting peaks in light output of a display, comprising the steps of:
(a) converting the light output into pulses having a pulse width corresponding to light output; and
(b) detecting a change in pulse width as a peak in the light output.

13. A method as recited in claim 12, wherein step (b) comprises determining when the pulse width changes from increasing to decreasing.

14. A method of detecting peaks in light output of a display, comprising:
(a) converting the light output into frequency; and
(b) detecting a change in frequency as the peak.

15. A method as recited in claim 14, wherein step (b) detects a transition in frequency from decreasing to increasing.

16. A method of detecting a display refresh synchronization time, comprising the steps of:
(a) sampling light output by the display;
(b) detecting a time of a peak in the light output as defining a refresh synchronization time;
(c) detecting first and second times of peaks in the light output;
(d) determining a difference between the first and second times as a length of a refresh cycle where the first time is a start of the refresh cycle;
(e) determining the integration period as an integral number of refresh cycles by;
(e1) determining a number of refresh cycles in a maximum time count of a time counter; and
(e2) measuring a time required for the number of refresh cycles as the integration time using the light output;
(f) detecting a start of a refresh period from the light output;
(g) setting a start of luminance measurement at the start of the refresh period adjusted by a predetermined portion of the refresh period; and
(h) counting pulses for the integration time period starting at the start time.

17. A method as recited in claim 16 wherein step (f) comprises detecting a time of the peak in the light output as the start of the refresh period.

18. A method as recited in claim 16, wherein step (f) comprises:
(f1) counting pulses in fixed period time periods; and
(f2) selecting a beginning of the one of the fixed period time periods as the start of the refresh period that has the lowest count.

19. A method as recited in claim 16, further comprising defaulting to a fixed integration time period when a refresh peak is not detected.

20. A system for measuring luminance of a display, comprising:
a computer producing a color patch on the display; and
a light sensing unit coupled to the computer, sensing light output by the display, determining an integration time period for measuring the luminance from the light output, and measuring the luminance of the display during the integration time period.

21. A system as recited in claim 20, wherein the light sensing unit converts light output into frequency pulses supplied to said computer.

22. A light sensing unit for a display, comprising:
a light sensor sensing light output of the display; and
synchronizing means for synchronizing luminance measurement to a refresh cycle of the display responsive to the light output.

23. A unit as recited in claim 22, wherein said synchronizing means comprises a programmable microcontroller.

24. A unit as recited in claim 22, wherein said synchronizing means comprises:
peak detection means for detecting peaks in the light output;
refresh cycle determination means for determining a refresh cycle period and cycle start time from the peaks;
integration means for determining an integration period responsive to the refresh cycle period; and
phasing means for determining an integration start time responsive to cycle start time and a predetermined portion of the refresh cycle period.

25. A unit as recited in claim 22, wherein said light sensor comprises a light to frequency converter.
